# EUROPÄISCHE PATENTSCHRIFT

(11) **EP 3 147 095 B1**
(45) Veröffentlichungstag und Bekanntmachung des Hinweises auf die Patenterteilung: **30.01.2019**
(21) Anmeldenummer: 15187121.7
(22) Anmeldetag: 28.09.2015
(51) Int. Cl.: B29C 33/40, A61C 13/00, A61C 13/20, B29C 39/14, B29C 39/38

(54) **VERFAHREN ZUR HERSTELLUNG VON DENTALEN KOMPOSITBLÖCKEN**
METHOD FOR THE PREPARATION OF DENTAL COMPOSITE BLOCKS
PROCEDE DE FABRICATION DE BLOCS COMPOSITES DENTAIRES

(43) Veröffentlichungstag der Anmeldung: 29.03.2017
(73) Patentinhaber: Coltène/Whaledent AG, 9450 Altstaetten (CH)
(72) Erfinder: Kopfmann, Cornelia, 9000 St. Gallen (CH); Böhner, Ralf, 9451 Kriessern (CH)
(74) Vertreter: Hepp Wenger Ryffel AG

(56) Entgegenhaltungen:
- EP-A1- 0 118 079
- EP-A1- 2 881 077
- WO-A1-00/40206
- WO-A1-03/078143
- WO-A1-2013/076493
- WO-A1-2015/045698
- WO-A1-2015/092392
- CN-A- 104 494 105
- FR-A1- 2 614 490
- US-A- 4 682 644
- US-A1- 2004 241 614
- US-A1- 2013 277 873
- US-A1- 2014 162 216
- US-A1- 2014 248 584
- Anonymous: "Plastics - Thermal Conductivity Coefficients", , 21. Juni 2016 (2016-06-21), XP055282325, Gefunden im Internet: URL:http://www.engineeringtoolbox.com/ther mal-conductivity-plastics-d_1786.html [gefunden am 2016-06-21]

## Beschreibung

Die Erfindung betrifft ein Verfahren zur Herstellung von dentalen Kompositblöcken.

Verfahren zur Herstellung von dentalen Kompositblöcken sind hinreichend bekannt. Dabei werden dentale Kompositmaterialien in eine Form eingefüllt und ausgehärtet. Polymerisierbare Komponenten, beispielsweise eines Kompositmaterials, werden in der Regel u.a. mittels eines Initiators ausgehärtet.

WO 2007/099158 A2 beschreibt ein Material umfassend eine polymerisierbare Komponente und einen Initiator, welcher in phlegmatisierter Form vorliegt. Das Material wird in eine Küvette einbeziehungsweise nachgepresst, dass Material innerhalb der Küvette erwärmt und so der phlegmatisierte Initiator freigesetzt. Entsprechend erfolgt eine wärmeinduzierte Polymerisation des Materials. Nachteilig an diesem Verfahren ist, dass ein aktives Nachpressen des Materials in der Küvette notwendig ist, um einen Polymerisationsschrumpf zu vermeiden. Dies ist vergleichsweise aufwändig und schwierig zu kontrollieren.

Die US 2014/162216 beschreibt eine Zusammensetzung umfassend ein polymerisierbares Harz mit ungesättigten Ethylengruppen, einem thermisch aktivierten Initiator und anorganischen Füllpartikeln.

Mit der Zusammensetzung lassen sich Dentalblöcke herstellen. Das Aushärten der Dentalblöcke erfolgt in einem mehrschrittigen Verfahren.

Die WO 03/078143 beschreibt ein Verfahren zur Herstellung von duroplastischen Halbfertigprodukten in einem kontinuierlichen Verfahren. Das Kompositmaterial wird erst nach Verlassen der Extrusionsvorrichtung ausgehärtet.

Es ist daher die Aufgabe der Erfindung, die Nachteile des Stands der Technik zu überwinden. Insbesondere ist es eine Aufgabe der Erfindung, ein Verfahren zur Herstellung von dentalen Kompositblöcken bereitzustellen, welches besonders gut kontrollierbar ist, schnell ausführbar und eine erhöhte Qualität der Kompositblöcke gewährleistet. Diese Aufgaben werden durch die Merkmale der unabhängigen Ansprüche gelöst.

Die Erfindung betrifft ein Verfahren zur Herstellung von dentalen Kompositblöcken. Eine insbesondere im Wesentlichen hohlzylindrische Vorrichtung mit einer ersten und einer zweiten Öffnung wird bereitgestellt zur kontinuierlichen Herstellung eines dentalen Kompositblocks, insbesondere ein zweiseitig geöffneter Behälter. Des Weiteren werden ein aushärtbares Kompositmaterial und eine Temperiereinrichtung bereitgestellt. Durch die erste Öffnung wird das aushärtbare Kompositmaterial in die Vorrichtung eingebracht, insbesondere kontinuierlich eingebracht. Das insbesondere kontinuierlich eingebrachte Kompositmaterial wird durch einen Energieeintrag mittels der Temperiereinrichtung ausgehärtet. Dabei wird der Energieeintrag aufrechterhalten bis ein im Wesentlichen formstabiler Kompositblock hergestellt ist. Dabei kann der Energieeintrag über eine Länge von 1 cm bis 300 cm, bevorzugt 1,5 bis 200 cm, besonders bevorzugt 5 bis 60 cm der im wesentlichen hohlzylindrischen Vorrichtung (1) und/oder für eine Dauer von 1 min bis 200 min, bevorzugt 5 bis 60 min, besonders bevorzugt 15 bis 45 min, erfolgen. Aushärtbares Kompositmaterial wird durch die erste Öffnung der im Wesentlichen hohlzylindrischen Vorrichtung nachgeführt, insbesondere kontinuierlich nachgeführt. Das Kompositmaterial bewegt sich also relativ zur Vorrichtung. Ebenso kann das aushärtbare Kompositmaterial nachgepresst werden. Das ausgehärtete Kompositmaterial wird aus der zweiten Öffnung der Vorrichtung ausgeleitet. Derart wird ein Verfahren bereitgestellt, welches besonders gut kontrollierbar ist und schnelle Fertigungszeiten gewährleistet. Insbesondere werden derart verbesserte Kompositblöcke mit verbesserten Eigenschaften bereitgestellt. Insbesondere treten geringere Fehlstellen innerhalb der dentalen Kompositblöcke auf.

Das Nachführen, insbesondere kontinuierliche Nachführen, von aushärtbarem Kompositmaterial erfolgt bei maximal 10 Bar. Die insbesondere im Wesentlichen hohlzylindrische Vorrichtung kann jede Form sein, beispielsweise mit aufgewölbten Kanten oder trapezförmig. Da die typischerweise im Spitzguss hergestellten hohlzylindrischen Vorrichtungen in der Regel abweichend von exakt hohlzylindrischen Formen sind, wird unter einer im Wesentlichen hohlzylindrischen Vorrichtung hier und im Folgenden verstanden, dass auch geometrische Abweichungen von exakten hohlzylindrischen Formen unter dem vorgenannten Begriff zu verstehen sind.

Das ausgehärtete und ausgeleitete Kompositmaterial kann nachfolgend bearbeitet, insbesondere zurechtgeschnitten werden. Auf diese Weise kann das ausgeleitete Kompositmaterial zu Grössen zurechtgeschnitten werden, welche nachfolgend für die Herstellung von dentalen Restaurationen jeglicher Grösse einsetzbar sind.

Des Weiteren kann eine Halterung zur Weiterverarbeitung des Kompositmaterials zu einer dentalen Restauration an das ausgehärtete Kompositmaterial angebracht werden. Dabei können jegliche Halterungen, welche im Dentalbereich verwendet werden, angebracht werden. Auf diese Weise kann das ausgehärtete Kompositmaterial für die Weiterverarbeitung beispielsweise in handelsüblichen CAD/CAM-Verfähren verwendet werden. Somit ist das ausgehärtete Kompositmaterial für die Herstellung von dentalen Restaurationen auf allen handelsüblichen Plattformen verwendbar.

Die im Wesentlichen hohlzylindrische Vorrichtung kann eine Breite im Bereich von 0,5 bis 5 cm, insbesondere 1 bis 3 cm aufweisen. Die Grundfläche der im Wesentlichen hohlzylindrischen Vorrichtung kann im Bereich von 0,25 bis 25 cm², insbesondere 1 bis 9 cm², liegen. Auf diese Weise können dentale Restaurationen unterschiedlichster Grössen aus dem ausgehärteten Material hergestellt werden.

Das Kompositmaterial kann > 40 Gew.-% eines Füllers, im Sinne eines Füllstoffes oder einer Mischung von Füllstoffen, aufweisen. Dabei ist insbesondere eine relative Zusammensetzung vorgesehen, welche eine Einzelkomponente oder Zusammensetzungen aus Einzelkomponenten darstellt. Der Füller beziehungsweise die Füller können singulär, im Sinne von isolierten Füller sein, aber auch agglomeriert oder als Cluster vorliegen. Unter Agglomeraten werden allgemein mehr oder weniger verfestigte Anhäufungen von vorher losen Bestandteilen zu einem festen Verbund verstanden. In der Verfahrenstechnik werden Agglomerate beispielsweise durch Granulieren, Flockieren oder Sintern erhalten. Die Cluster können dabei mechanisch oder chemisch verbunden sein. Die vorgenannten > 40 Gew.-% des Füllers können 0 bis 100 Gew.-% Dentalglas mit einer durchschnittlichen Partikelgrösse von 0,1 bis 5 µm (beispielsweise erhältlich von Schott), 0 bis 100 Gew.-% Splitter aus organischer Matrix und einem organischen Füller mit einer durchschnittlichen Partikelgrösse von 1 bis 30 µm aufweisen. Dabei entsprechen die Splitter einem gemahlenen Kompositmaterial. Des Weiteren umfasst die Zusammensetzung 0 bis 100 Gew.-% im Sol-Gel-Verfahren hergestellte anorganische Füller mit einer durchschnittlichen Partikelgrösse von 0,1 bis 5 pm sowie 0 bis 100 Gew.-% einer insbesondere pyrogenen Kieselsäure mit einer durchschnittlichen Partikelgrösse von 0,002 bis 0,25 pm. Auf diese Weise wird eine Kompositmaterialzusammensetzung für das Verfahren bereitgestellt, welche den Anforderungen im Dentalbereich, beispielsweise hinsichtlich Abrasionsfähigkeit, Kompressionshärte und Langlebigkeit, gerecht wird.

Die Temperiereinrichtung kann einen geeigneten Energieeintrag, welcher durch den Fachmann in Routineversuchen an die gegebenen Bedingungen angepasst werden kann, auf die Wandung der im Wesentlichen hohlzylindrischen Vorrichtung ausüben. Derart wird ein definierter Energieeintrag auf die hohlzylindrische Vorrichtung sichergestellt und das eingebrachte Kompositmaterial ausgehärtet. Durch eine Regelung beziehungsweise Steuerung des Energieeintrags lässt sich die für die Aushärtung erforderliche Energie abhängig vom eingesetzten Kompositmaterial anpassen.

Für das Material der Vorrichtung wird bevorzugt ein Stoff mit einer Wärmeleitfähigkeit von 0,05 bis 12 W/(m x K) verwendet. Dabei werden bevorzugt Kunststoffe eingesetzt, die ungefüllt, gefüllt oder geschäumt sein können. Insbesondere handelt es sich um ein Kunststoffmaterial mit einer Wärmeleitfähigkeit von 0,14 bis 1,2 W/(m x K). Es können aber auch andere Materialien, beispielsweise Metalle eingesetzt werden, die eine höhere Wärmeleitfähigkeit aufweisen. In diesem Falle kann die Wärmeleitung durch einen Unterbruch beispielsweise einen Isolator oder eine Isolationsschicht mit einer Wärmeleitfähigkeit von 0,05 bis 12 W/(m x K) verhindert werden. Dabei ist der Isolator nahe dem Bereich des Energieeintrags mittels der Temperiereinrichtung angeordnet. Auf diese Weise wird sichergestellt, dass sich die Wärmeenergie nicht auf die gesamte Vorrichtung ausbreitet und so ein ungewolltes Polymerisieren von eingebrachtem Kompositmaterial ausserhalb des Polymerisationsbereichs verhindert wird.

**Ein** weiterer Aspekt, der aber nicht zur vorliegenden Erfindung gehört, betrifft ein Verfahren zur Herstellung von dentalen Kompositblöcken umfassend die folgenden Schritte. Bereitstellen einer insbesonderen im Wesentlichen hohlzylindrischen Form, insbesondere eines Behälters, Bereitstellen eines aushärtbaren Kompositmaterials, und Bereitstellen einer fokussierbaren Wärmequelle. Das aushärtbare Kompositmaterial wird in die im Wesentlichen hohlzylindrische Form insbesondere in den Behälter eingebracht. Das eingebrachte, aushärtbare Kompositmaterial in der Form kann insbesondere mittels Gravitation, Sedimentation oder Pressen verdichtet werden. Das eingebrachte, aushärtbare Kompositmaterial wird mittels eines insbesondere sukzessiven Wärmetransfers auf die im Wesentlichen hohlzylindrische Form ausgehärtet, wobei das Kompositmaterial konstant in der Form verbleibt bzw. sich nicht relativ zur Form bewegt. Dies wird beispielsweise derart erreicht, dass ein mit aushärtbarem Kompositmaterial befüllter Behälter, bspw. eine Küvette, in ein Wärmebad eingetaucht wird und sich damit die Wärmefront am Behälter entlang bewegt. Dabei ist die Wandung der im Wesentlichen hohlzylindrischen Form, insbesondere des Behälters, derart ausgestaltet, dass sie eine Wärmeleitfähigkeit im Bereich von 0,05 bis 12 W/(m x K), insbesondere 0,14 bis 1,2 W/(m x K) aufweist. Auf diese Weise wird ein Verfahren bereitgestellt, in welchem auf besonders vorteilhafte Weise ein eingebrachtes Kompositmaterial ausgehärtet werden kann. Derart wird insbesondere ein ausgehärtetes Kompositmaterial für ein homogenes Werkstück ohne Porositäten und Lufteinschlüsse bereitgestellt. Das insbesondere luftfreie Verdichten kann beispielsweise durch ein Entlüften beispielsweise mittels Vakuum und/oder Zentrifugation erfolgen.

Des Weiteren kann eine Halterung zur Weiterverarbeitung des Kompositmaterials zu einer dentalen Restauration an das ausgehärtete Kompositmaterial angebracht werden. Derart ist das ausgehärtete Kompositmaterial gängigen Plattformen für die Weiterverarbeitung zu dentalen Restaurationen zuführbar.

Die Wärmequelle übt einen Energieeintrag auf die Wandung der im Wesentlichen hohlzylindrischen Form ausüben, bis ein im Wesentlichen formstabiler Kompositblock hergestellt ist. Derart wird ein definierter Energieeintrag auf die im Wesentlichen hohlzylindrische Form sichergestellt und das eingebrachte Kompositmaterial ausgehärtet. Durch eine Regelung beziehungsweise Steuerung des Energieeintrags lässt sich die für die Aushärtung erforderliche Energie abhängig vom eingesetzten Kompositmaterial anpassen. Der Energieeintrag lässt sich durch einen Fachmann in Routineversuchen an die gegebenen Bedingungen anpassen.

Die im Wesentlichen hohlzylindrische Form, insbesondere der Behälter, kann derart ausgestaltet sein, dass sie im Wesentlichen die Abmessungen eines dentalen Kompositblocks aufweist. Die Breite kann im Bereich von 0,5 bis 5 cm, insbesondere 1 bis 3 cm, liegen. Die Grundfläche der im Wesentlichen hohlzylindrischen Form kann im Bereich von 0,25 bis 25 cm², insbesondere 1 bis 9 cm², liegen. Ebenso sind Abmessungen von 12 cm x 3 cm, insbesondere 10 cm x 2,5 cm, vorsehbar. Auf diese Weise können dentalen Restaurationen unterschiedlichster Grössen aus dem ausgehärteten Material hergestellt werden.

Hier und im Folgenden kann die im Wesentlichen hohlzylindrische Form, insbesondere der Behälter, vorzugsweise eine Küvette sein.

Das Kompositmaterial kann > 40 Gew.-% Füller, im Sinne eines Füllstoffes aufweisen. Das Kompositmaterial und der Füller können wie vorgängig erläutert zusammengesetzt sein.

Die Wärmequelle und/oder die im Wesentlichen hohlzylindrische Form, insbesondere der Behälter, können höhenverstellbar angeordnet sein. Dabei können die beiden vorgenannten Elemente insbesondere relativ zu einander höhenverstellbar angeordnet sein. Darunter ist zu verstehen, dass entweder die Wärmequelle beweglich gegenüber der im Wesentlichen hohlzylindrischen Form angeordnet ist, die im Wesentlichen hohlzylindrische Form gegenüber der Wärmequelle höhenverstellbar angeordnet ist, oder sowohl die Wärmequelle als auch den im Wesentlichen hohlzylindrische Form gegeneinander höhenverstellbar angeordnet sind. Auf diese Weise können die relativen Positionen der beiden vorgenannten Elemente in Abhängigkeit voneinander angepasst werden, und so auf besonders optimale Weise ein sukzessiver Energieeintrag auf die Form ermöglicht werden. Derart lässt sich insbesondere das Verfahren besonders vorteilhaft steuern.

Ein weiterer Aspekt der Erfindung betrifft die Verwendung eines dentalen Kompositblocks, umfassend die folgenden Schritte: Herstellen eines dentalen Kompositblocks nach einem Verfahren der Ansprüche wie vorstehend beschrieben und Verwendung des dentalen Kompositblocks für die Herstellung von dentalen Ersatzteilen. Derart werden dentale Ersatzteile aus dem ausgehärteten Kompositmaterial, welches besonders vorteilhafte Eigenschaften beispielsweise Abrasionsfähigkeit, Kompressionshärte und Langlebigkeit aufweisen, hergestellt.

Ein weiterer, nicht beanspruchter Aspekt der Erfindung betrifft eine Durchflussvorrichtung, welche im Wesentlichen hohlzylindrisch ausgestaltet ist, insbesondere ein zweiseitig geöffneter Behälter, für die Herstellung eines dentalen Kompositblocks. Die Vorrichtung weist in einem ersten Bereich entlang eines Teils der Länge der Vorrichtung entweder eine Isolierung auf oder das Material des ersten Bereichs der Vorrichtung weist eine Wärmeleitfähigkeit von 0,05 bis 12 W/(m x K) auf. Optional weist die Vorrichtung in einem zweiten Bereich eine weitere Isolierung auf oder das Material des zweiten Bereichs weist eine Wärmeleitfähigkeit von 0,05 bis 12 W/(m x K) auf. Dabei besteht zwischen dem ersten und der zweiten Bereich entlang der Länge ein Abstand. Die Isolatoren sind derart ausgestaltet und angeordnet, dass bei einem Wärmeeintrag auf einen Bereich der Form die Wärme, insbesondere in dem vorgenannten Bereich der Form, konzentriert wird. Auf diese Weise wird ein Energieeintrag auf entfernte Bereiche verhindert und so ein ungewolltes Polymerisieren von eingeleitetem Kompositmaterial vor dem Bereich des Wärmeeintrags ausgeschlossen. Derart wird ein scharfer beziehungsweise konzentrierter Bereich zur Aushärtung des Kompositmaterials bereitgestellt. Ein einzelner Isolator kann dem Bereich des Wärmeeintrags vorgelagert sein, sodass ankommendes Material nicht verfrüht beginnt auszuhärten. Ebenso können zwei Isolatoren angeordnet sein, sodass der Bereich des Wärmeeintrags von den beiden Isolatoren eingeschlossen wird, wodurch die Wärmefront nochmals verschärft wird. Entsprechend ist die vorgenannte Vorrichtung inklusive Isolatoren in einem der vorgenannten Herstellungsverfahren, welche insbesondere kontinuierlich ablaufen, einsetzbar. Unter kontinuierlich wird vorgängig hier und im Folgenden verstanden, dass aushärtbares Kompositmaterial kontinuierlich in eine erste Öffnung einer Vorrichtung eingebracht wird, dass eingebrachte Material ausgehärtet wird, und aus einer zweiten Öffnung ausgeleitet wird.

Die Erfindung wird im Folgenden anhand von Abbildungen exemplarisch Ausführungsbeispiele näher erläutert.

Es zeigen:
- Figur 1:: Eine erste Ausführungsform einer Vorrichtung zur Ausführung des erfindungsgemässen Verfahrens zur Herstellung von dentalen Kompositblöcken;
- Figur 2:: Eine zweite Ausführungsform einer Vorrichtung zur Ausführung des erfindungsgemässen Verfahrens zur Herstellung von dentalen Kompositblöcken;
- Figur 3:: Anordnung einer Vorrichtung für die Ausführung eines nicht zur Erfindung gehörenden Verfahrens zur Herstellung von dentalen Kompositblöcken.

Die im Rahmen eines Ausführungsbeispiels eingesetzten Kompositmaterialien sind beispielhaft der nachfolgenden Tabelle zu entnehmen.

| | |
|---|---|
| Harz (Methacrylat / Nanofüller) | 33,5 Gew.-% |
| Bariumglas, 0,7 und 1,2µm (1:1; Schott) | 64,0 Gew.-% |
| Peroxidischer Initiator | 2,0 Gew.-% |
| Farben/Stabilisatoren | 3,5 Gew.-% |

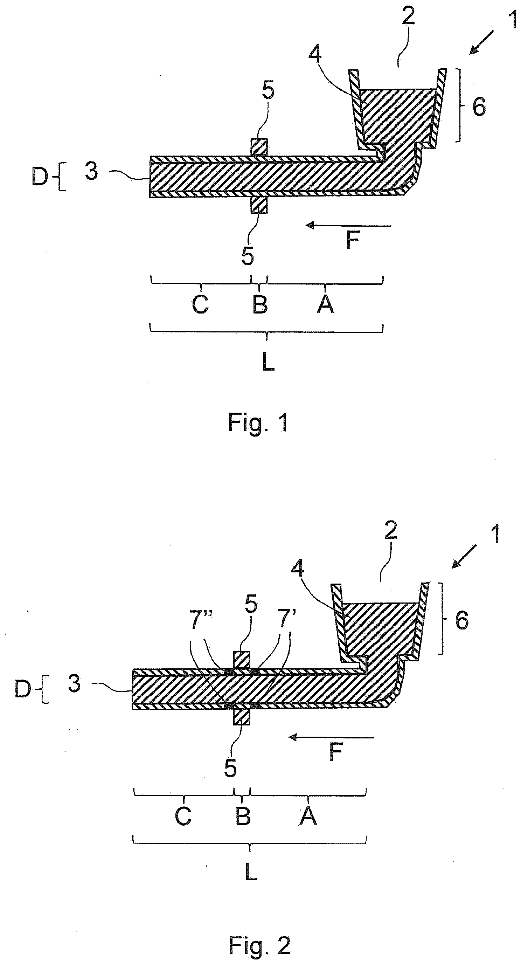

Figur 1 zeigt eine Vorrichtung 1 umfassend einen hohlzylindrischen Bereich mit der Länge L und ein Reservoir 6. Durch eine erste Öffnung 2 wird aushärtbares Kompositmaterial 4 in das Reservoir 6 der Vorrichtung 1 eingeführt. Das Reservoir 6 steht im Kontakt mit dem hohlzylindrischen Bereich der Vorrichtung 1, sodass das aushärtbare Kompositmaterial 4 in den hohlzylindrischen Bereich einfliesst. Ein Einfliessen bzw. Nachfliessen von aushärtbaren Kompositmaterial erfolgt in der Fliessrichtung F. Die Vorrichtung 1 umfasst weiter eine Temperiereinrichtung 5, welche einen Energieeintrag über die Wandung der Vorrichtung auf das aushärtbare Kompositmaterial ausübt. Derart wird ankommendes Kompositmaterial im Bereich der Temperiereinrichtung 5 ausgehärtet. Durch Nachfliessen des aushärtbaren Kompositmaterial im Bereich A der Vorrichtung 1 wird im Bereich B der Vorrichtung ausgehärtetes Kompositmaterial durch den Bereich C und die zweite Öffnung 3 der Vorrichtung 1 ausgeleitet. Auf diese Weise wird kontinuierlich aus aushärtbarem Kompositmaterial ausgehärtetes Kompositmaterial hergestellt, welches nach dem Verlassen aus der zweiten Öffnung 3 der Vorrichtung 1 zu dentalen Kompositblöcken zurechtgeschnitten werden kann. Die Vorrichtung 1 kann mit vorteilhaften Breiten D und Längen L ausgestaltet sein.

Figur 2 zeigt alle Merkmale, die bereits vorgängig für Figur 1 beschrieben wurden. Des Weiteren zeigt Figur 2 zwei Isolatoren 7', 7", welche die Temperiereinrichtung 5 flankieren. Dabei ist der erste Isolator 7' aufwärts der Temperiereinrichtung 5 in Fliessrichtung F und der zweite Isolator 7" abwärts der Temperiereinrichtung 5 in Fliessrichtung F angeordnet. Derart wird der Energieeintrag auf die Wandung der Vorrichtung 1 durch die Temperiereinrichtung 5 durch die beiden Isolatoren 7', 7" an einer Ausdehnung auf andere Bereiche der Vorrichtung gehindert. Dementsprechend erfolgt der Energieeintrag nur im Bereich B der Vorrichtung, sodass ein Aushärten, Polymerisieren des aushärtbaren Kompositmaterial nur in diesem Bereich B erfolgt. Ein Anpolymerisieren im Bereich A kann somit ausgeschlossen werden. Auf diese Weise wird das aufsetzbare Kompositmaterial im Bereich B gezielt und kontrolliert ausgehärtet.

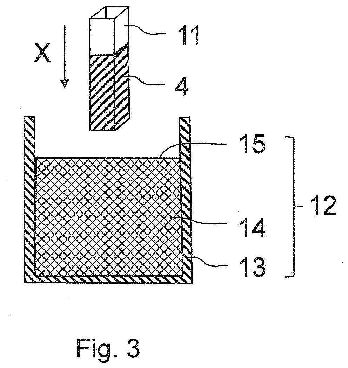

Figur 3 zeigt eine Anordnung einer Küvette 11 und einer Wärmequelle 12 in Form eines Heizbades 13 mit einer Heizflüssigkeit 14 und einer Oberfläche 15 der Heizflüssigkeit 14. Die Küvette 11 ist mit aushärtbares Kompositmaterial 4 befüllt. Die befüllte Küvette 11 wird in der Bewegungsrichtung X kontrolliert der Oberfläche 15 der Heizflüssigkeit 14 genähert und in diese eingetaucht. Durch ein kontinuierliches Nachführen der befüllten Küvette wird durch ein Eintauchen in die Heizflüssigkeit eine definierte Wärmefront auf das aushärtbare Kompositmaterial 4 angelegt. Entsprechend erfolgt eine Polymerisation des Kompositmaterials in dem Bereich der Wärmefront. Die Wand der Küvette weist eine Wärmeleitfähigkeit im Bereich von 0,05 bis 12 W/(m x K), insbesondere 0,14 bis 1,2 W/(m x K), auf. Die gewählte Wärmeleitfähigkeit gewährleistet eine definierte Wärmefront zur Aushärtung des Kompositmaterials innerhalb der Küvette. Somit wird ein dentales Kompositmaterial zur Herstellung von dentalen Kompositblöcken bereitgestellt, welches geringe Fehlstellen aufweist.

## Patentansprüche

1. Verfahren zur Herstellung von dentalen Kompositblöcken umfassend die Schritte:
- Bereitstellen einer insbesondere im wesentlichen hohlzylindrischen Vorrichtung (1) mit einer ersten und einer zweiten Öffnung (2, 3) zur kontinuierlichen Herstellung eines dentalen Kompositblocks, insbesondere ein zweiseitig geöffneter Behälter,
- Bereitstellen eines aushärtbaren Kompositmaterials (4),
- Bereitstellen einer Temperiereinrichtung (5),
- Einbringen, insbesondere kontinuierliches Einbringen, des aushärtbaren Kompositmaterials (4) durch die erste Öffnung (2) in die Vorrichtung (1),
- Aushärten des insbesondere kontinuierlich eingebrachten Kompositmaterials (4) durch einen Energieeintrag mittels der Temperiereinrichtung (5), sodass ein im Wesentlichen formstabiler Kompositblock hergestellt wird,
- Nachführen, insbesondere kontinuierliches Nachführen, von aushärtbarem Kompositmaterial (4) durch die erste Öffnung (2) der im wesentlichen hohlzylindrischen Vorrichtung (1),
- Ausleiten des ausgehärteten Kompositmaterials (4) aus der zweiten Öffnung (3) der Vorrichtung (1).

2. Verfahren gemäss Anspruch 1, wobei der Energieeintrag über eine Länge von 1 cm bis 300 cm, bevorzugt 1,5 bis 200 cm, besonders bevorzugt 5 bis 60 cm der im wesentlichen hohlzylindrischen Vorrichtung (1) und/oder für eine Dauer von 1 min bis 200 min, bevorzugt 5 bis 60 min, besonders bevorzugt 15 bis 45 min erfolgt.

3. Verfahren gemäss einem der Ansprüche 1 oder 2, wobei das ausgehärtete und ausgeleitete Kompositmaterial (4) bearbeitet, insbesondere zurechtgeschnitten, wird.

4. Verfahren gemäss einem der Ansprüche 1 bis 3, wobei eine Halterung zur Weiterverarbeitung des Kompositmaterials (4) zu einer dentalen Restauration an das ausgehärtete Kompositmaterial (4) angebracht wird.

5. Verfahren nach einem der Ansprüche 1 bis 4, wobei die im Wesentlichen hohlzylindrische Vorrichtung (1) eine Breite (D) im Bereich von 0,5 bis 5 cm, insbesondere 1 bis 3 cm und/oder eine Grundfläche im Bereich von 0,25 bis 25 cm², insbesondere 1 bis 9 cm², aufweist.

6. Verfahren nach einem der Ansprüche 1 bis 5, wobei das Kompositmaterial (4) > 40 Gew.-% Füller aufweist.

7. Verwendung eines dentalen Kompositblocks umfassend die folgenden Schritte:
Herstellen eines dentalen Kompositblocks nach einem Verfahren der Ansprüche 1 bis 6;
und Verwendung des dentalen Kompositblocks für die Herstellung von dentalen Ersatzteilen.

## Claims

1. A method for producing dental composite blocks, comprising the steps:
- providing an in particular substantially hollow-cylindrical device (1) having a first and a second opening (2, 3) for the continuous production of a dental composite block, in particular a container open on two sides,
- providing a curable composite material (4),
- providing a temperature control unit (5),
- introducing, in particular continuously introducing, the curable composite material (4) into the device (1) through the first opening (2),
- curing the in particular continuously introduced composite material (4) by an energy input by means of the temperature control unit (5),
- further supplying, in particular continuously further supplying, curable composite material (4) through the first opening (2) of the substantially hollow-cylindrical device (1),
- discharging the cured composite material (4) from the second opening (3) of the device (1).

2. The method as claimed in claim 1, wherein the energy input takes place over a length of from 1 cm to 300 cm, preferably from 1.5 to 200 cm, particularly preferably from 5 to 60 cm, of the substantially hollow-cylindrical device (1) and/or for a period of from 1 to 200 minutes, preferably from 5 to 60 minutes, particularly preferably from 15 to 45 minutes.

3. The method as claimed in either claim 1 or claim 2, wherein the cured and discharged composite material (4) is processed, in particular trimmed.

4. The method as claimed in one of claims 1 to 3, wherein a mount for further processing of the composite material (4) to a dental restoration is applied to the cured composite material (4).

5. The method as claimed in one of claims 1 to 4, wherein the substantially hollow-cylindrical device (1) has a width (D) in the range of from 0.5 to 5 cm, in particular from 1 to 3 cm, and/or a base area in the range of from 0.25 to 25 cm², in particular from 1 to 9 cm².

6. The method as claimed in one of claims 1 to 5, wherein the composite material (4) comprises > 40% by weight filler.

7. A method for producing dental composite blocks, comprising the steps:
producing a dental composite block by a process according to claims 1 to 6;
and use of the dental composite block for the fabrication of dental spare parts

## Revendications

1. Procédé de fabrication de blocs dentaires composites comprenant les étapes suivantes :
- fournir un dispositif (1), en particulier sensiblement en forme de cylindre creux, qui est pourvu d'une première et d'une deuxième ouverture (2, 3) et qui est destiné à la fabrication en continu d'un bloc dentaire composite, en particulier d'un récipient ouvert sur deux côtés,
- fournir un matériau composite durcissable (4),
- fournir un moyen de régulation de température (5),
- introduire, en particulier en continu, le matériau composite durcissable (4) dans le dispositif (1) par la première ouverture (2),
- durcir le matériau composite (4), introduit notamment en continu, par apport d'énergie à l'aide du moyen de régulation de température (5) de manière à produire un bloc composite de forme sensiblement stable,
- faire passer ensuite, notamment en continu, le matériau composite durcissable (4) à travers la première ouverture (2) du dispositif (1) sensiblement en forme de cylindre creux,
- évacuer le matériau composite durci (4) par la deuxième ouverture (3) du dispositif (1).

2. Procédé selon la revendication 1, l'apport d'énergie étant effectué sur une longueur de 1 cm à 300 cm, de préférence de 1,5 à 200 cm, de manière particulièrement préférée de 5 à 60 cm du dispositif (1) sensiblement en forme de cylindre creux et/ou pendant une période de 1 min à 200 min, de préférence 5 à 60 min, plus préférablement 15 à 45 min.

3. Procédé selon l'une des revendications 1 ou 2, le matériau composite (4) durci et évacué étant traité, notamment débité.

4. Procédé selon l'une des revendications 1 à 3, un support étant monté sur le matériau composite (4) durci en vue du traitement ultérieur du matériau composite (4) pour obtenir une restauration dentaire.

5. Procédé selon l'une des revendications 1 à 4, le dispositif (1) sensiblement en forme de cylindre creux ayant une largeur (D) dans la gamme allant de 0,5 à 5 cm, en particulier de 1 à 3 cm et/ou une surface de base dans la gamme de 0,25 à 25 cm², en particulier 1 à 9 cm².

6. Procédé selon l'une des revendications 1 à 5, le matériau composite (4) comportant plus de 40 % en poids de charge.

7. Utilisation d'un bloc dentaire composite comprenant les étapes suivantes :
fabriquer un bloc dentaire composite selon un procédé des revendications 1 à 6 ;
et utiliser le bloc dentaire composite pour la fabrication de pièces dentaires de rechange.
